(19) Europäisches Patentamt
European Patent Office
Office européen des brevets

(11) **EP 2 146 446 A1**

(12) **EUROPEAN PATENT APPLICATION**

(43) Date of publication:
**20.01.2010 Bulletin 2010/03**

(51) Int Cl.:
***H04B 10/158*** *(2006.01)*

(21) Application number: **09151433.1**

(22) Date of filing: **27.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **17.07.2008 JP 2008185713**

(71) Applicant: **MITSUBISHI ELECTRIC CORPORATION**
**Chiyoda-ku**
**Tokyo 100-8310 (JP)**

(72) Inventor: **Uto, Kenichi**
**c/o Mitsubishi Electric Corporation**
**Tokyo 100-8310 (JP)**

(74) Representative: **Prüfer & Partner GbR**
**European Patent Attorneys**
**Sohnckestraße 12**
**81479 München (DE)**

(54) **Optical receiver**

(57) An optical receiver of the present invention includes, a photoelectric conversion circuit for converting an optical input signal into an electrical signal, an AC to DC signal conversion circuit for converting the electrical signal to a DC signal, a high voltage generating circuit for supplying a voltage to the photoelectric conversion circuit, and a current sink circuit for drawing a current from an output of the high voltage generating circuit. In a first embodiment, the current drawn into the current sink circuit from the output of the high voltage generating circuit is increased as an output signal of the AC to DC signal conversion circuit decreases. In a second embodiment, current is drawn into the current sink circuit upon receiving a loss of signal output from a loss of signal detection circuit. In a third embodiment, the current drawn into the current sink circuit is increased as the photocurrent flowing from the high voltage generating circuit to the photoelectric conversion circuit decreases.

FIG. 1

**Description**

**Background of the Invention**

**Field of the Invention**

The present invention relates to an optical receiver capable of accurately detecting the presence or absence of an optical input signal.

**Background Art**

Optical receivers have a function to convert an optical input signal into an electrical output signal. The optical input signal carries electronic data representing voice, text, images, etc. (Text information is typically transmitted by e-mail over the Internet.) These electronic data are those which are digitized and encoded using a framing scheme specified by a particular communications protocol.

As is known, in order to increase the response speed of an optical receiver, it is necessary to reduce the gain of the first stage amplifier unit of the receiver. However, simply reducing the gain of the first stage amplifier unit results in a reduction in the S/N (signal to noise) ratio of the optical receiver. Therefore, a common way to increase the response speed of an optical receiver while maintaining the S/N ratio at an adequate level has been to increase the minimum sensitivity of the optical receiver.

This is generally accomplished by using an avalanche photodiode (hereinafter referred to as an "APD") in the photoelectric conversion circuit of the optical receiver. An APD is a photodiode with internal carrier multiplication capability. In this photodiode, electron-hole pairs generated by the optical input signal are accelerated by the high electric field in the depletion layer to collide with lattice atoms and thereby generate new electron-hole pairs, which in turn generate further pairs, i.e., an avalanche takes place. The drive voltage for APDs is relatively high, since the carriers must be accelerated by a high electric field, as described above.

On the other hand, the recent reduction in the size and in the power consumption of optical transmission, devices containing an optical receiver has resulted in a reduction in the power supplyvoltage to the receiver. If the optical receiver employs an APD in its photoelectric conversion circuit, the power supply voltage of the optical transmission device may be lower than the required drive voltage for the APD. In such a case, the optical receiver may include a high voltage generating circuit to apply a boosted voltage to the APD.

In the optical receiver, the electrical signal generated by the APD is amplified and converted into a DC signal which is then compared with a predetermined alarm threshold value. This comparison is made by a loss of signal detection circuit. That is, the loss of signal detection circuit detects interruption of the optical input signal by comparing the above electrical signal (i.e., DC signal) with the alarm threshold value. It is preferable that this loss of signal detection circuit should function stably and detect interruption of optical signal accurately and reliably, since the circuit serves to provide an alarm when the optical receiver or the optical transmission device including it falls into an abnormal condition. The following patent documents disclose techniques for improving the operating stability characteristics, etc. of optical receivers: Japanese Laid-Open Patent Publication Nos. 1-245725 (1989), 58-124339 (1983), 2005-354548, and 2005-304022. [Other prior art includes Japanese Laid-Open Patent Publication No. 7-162369 (1995) and International Patent Application Publication No. WO2004/010613.]

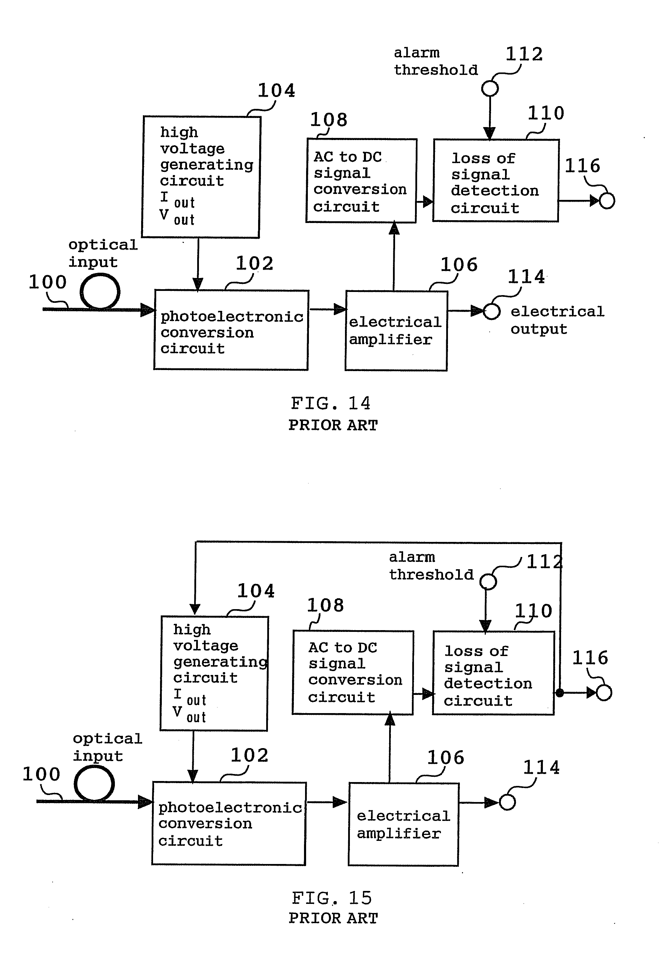

There will now be described, with reference to Figs. 14 to 16, the problems of the prior art which are addressed by the present invention. Fig. 14 illustrates the configuration of a typical optical receiver. Referring to Fig. 14, an optical input signal is input to a photoelectric conversion circuit 102 through an optical fiber 100. The photoelectric conversion circuit 102 includes an APD which is driven by a voltage from a high voltage generating circuit 104 and which converts the optical input signal into an electrical signal.

The electrical signal output from the photoelectric conversion circuit 102 is delivered to an electrical amplifier 106 which amplifies it and outputs it to an AC to DC signal conversion circuit 108. The AC to DC signal conversion circuit 108 converts the received signal into a DC signal which is then input to a loss of signal detection circuit 110. The loss of signal detection circuit 110 compares the DC signal with a predetermined threshold value to determine whether or not there is a loss of signal or break. If a loss of signal is detected, the loss of signal detection circuit 110 outputs an alarm signal on an output 116 of the optical receiver.

Thus, this type of optical receiver includes an APD driven by an output voltage from a high voltage generating circuit, and the optical input signal is converted by the APD into an electrical signal which is used to detect an interruption of the optical input signal. In such an optical receiver, the voltage applied to the APD is preferably constant in order to ensure stable operation of the APD. That is, the high voltage generating circuit must apply a substantially constant voltage to the APD.

However, at the moment the optical input signal is interrupted, the output current, Iout, of the high voltage generating circuit drops to very close to zero. In the past this has caused undesired feedback in the high voltage generating circuit due to a control error, or due to the limited controllability of the control system. Specifically, this feedback is such that the output voltage, Vout, of the high voltage generating circuit is increased, resulting in an increase in the dark current of the APD. As a result, the loss of signal detection circuit receives an electrical signal whose level is greater than a predetermined threshold level (described later) even though the optical input signal is interrupted, thus introducing a loss of signal detection error (i.e., resulting in the loss of signal being undetected).

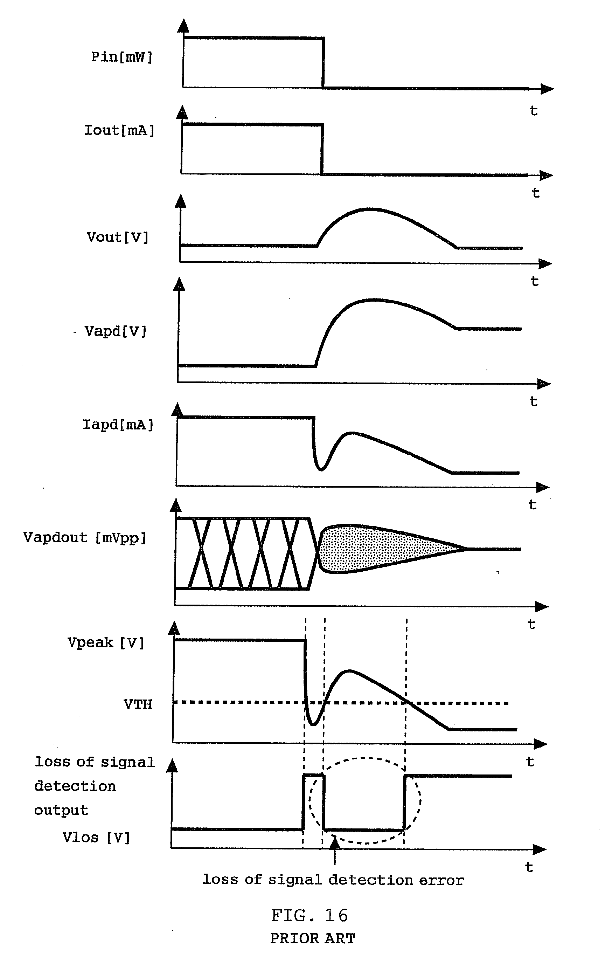

This problem will be described in detail below with reference to the current and voltage waveforms shown in Fig. 16. Referring to Fig. 16, at the moment the optical input signal Pin is interrupted, the output current Iout of the high voltage generating circuit falls to very near zero since the output current Iapd of the APD is decreased.

It should be noted that the high voltage generating circuit may use PWM (pulse width modulation) to maintain its output voltage Vout constant. The convergence time of the PWM control loop is relatively long (typically 10 msec or more) to ensure that the output voltage Vout is immune to external noise.

For instance, let it be assumed that the output current Iout of such a high voltage generating circuit falls to very near zero as a result of the optical input signal to the optical receiver being substantially interrupted, as shown in Fig. 15 (the optical input signal having a shorter duration than the convergence time of the PWM control loop of the high voltage generating circuit). In such a case, feedback may occur in the high voltage generating circuit due to a control error, or due to the limited controllability of the control system, so that the output voltage Vout of the high voltage generating circuit rises instantaneously, thereby increasing the dark current of the APD of the photoelectric conversion circuit. This results in an increase in the output current Iapd of the APD (which has decreased due to the interruption of the optical input signal). As a result, the signal level output, Vpeak, of the AC to DC signal conversion circuit 108 exceeds the threshold voltage VTH shown in Fig. 16, even through the optical input signal is interrupted, thus causing a loss of signal detection error (i.e., leaving the interruption undetected), as indicated by the graph of the loss of signal detection output Vlos shown below in Fig. 16 (see the portion within the dashed circle).

Equation 1 below represents the output current Iout of the high voltage generating circuit when the optical receiver receives no optical input signal:

$$Iout \approx \overline{i_{Ns}^{2}} = 2 \times q \times Id \times B \times M^{2+x} \quad \cdot \cdot \cdot \ equation 1$$

2 below.

$$M = \frac{1}{1-(\frac{V_{b}}{V_{B}})^{n_{M}}} \quad \cdot \cdot \cdot \ equation\ 2$$

where Vb is the reverse voltage applied to the APD and $V_{B}$ is the breakdown voltage of the APD. As Equations 1 and 2 indicate, the shot noise $i_{Ns}^{2}$ and the multiplication factor M increase as the reverse voltage Vb approaches the breakdown voltage $V_{B}$. As described above, when the optical input signal to the optical receiver is interrupted, the output current Iapd of the APD must be maintained at a low level to prevent the interruption from being undetected. However, with this high voltage generating circuit using PWM control, when the optical input signal is interrupted, the output voltage Vout of the high voltage generating circuit may increase due to a control error, or due to the limited controllability of the control system, resulting in an increase in the cathode voltage Vapd and in the output current Iapd of the APD.

Japanese Laid-Open Patent Publication No. 58-124339 (1983) noted above discloses a technique of preventing an excessive reverse voltage from being applied to the APD when no optical input signal is applied to the optical receiver, i.e., when the APD is in its standby state. More specifically, the cathode voltage Vapd of the APD is varied in response to the output of the loss of signal detection circuit (referred to in the above patent publication as the "peak detecting circuit"). Fig. 15 is a schematic block diagram showing the configuration of the optical receiver disclosed in that publication. It should be noted that those components common to Fig. 14 retain the same reference numerals. As shown in Fig. 15, the output of the loss of signal detection circuit 110 is fed back to the high voltage generating circuit 104 to prevent an increase in the output voltage Vout of the high voltage generating circuit 110 due to the interruption of the optical input signal.

However, this technique of controlling the output voltage Vout of the high voltage generating circuit 110 results in the time constant of the high voltage generating circuit being significantly longer than those of the other circuits or components, thereby preventing the optical receiver or the high voltage generating circuit from responding sufficiently quickly. This means that it is not possible to reliably prevent an increase in the output voltage Vout of the high voltage generating circuit 110 due to the interruption of the optical input signal and reliably detect the interruption.

## Summary of the Invention

The present invention has been devised to solve the above problems. It is, therefore, an object of the present invention to provide an optical receiver whose loss of signal detection circuit can reliably detect a loss of signal.

According to one aspect of the present invention, an optical receiver includes, a photoelectric conversion circuit for converting an optical input signal into an electrical signal, an AC to DC signal conversion circuit for converting the electrical signal to a DC signal, a high voltage generating circuit for supplying a voltage to the photoelectric conversion circuit, and a current sink circuit for drawing a current from an output of the high voltage generating circuit. The current drawn into the current sink circuit from the output of the high voltage generating circuit is increased as an output signal of the AC to DC signal conversion circuit decreases.

According to another aspect of the present invention, an optical receiver includes, a photoelectric conversion circuit for converting an optical input signal into an electrical signal, an AC to DC signal conversion circuit for converting the electrical signal to a DC signal, a high voltage generating circuit for supplying a voltage to the photoelectric conversion circuit, a loss of signal detection circuit for comparing a voltage value of an output signal of the AC to DC signal conversion circuit with a threshold voltage to determine whether or not the optical input signal has been interrupted, and a current sink circuit for drawing a current from an output of the high voltage generating circuit upon receiving a loss of signal output that is output from the loss of signal detection circuit when the optical input signal is interrupted.

According to another aspect of the present invention, an optical receiver includes, a photoelectric conversion circuit for converting an optical input signal into an electrical signal, a high voltage generating circuit for supplying a voltage to the photoelectric conversion circuit, a photocurrent detection circuit for detecting a photocurrent flowing from the high voltage generating circuit to the photoelectric conversion circuit, and a current sink circuit for drawing a current from an output of the high voltage generating circuit. The current drawn into the current sink circuit from the output of the high voltage generating circuit is increased as the photocurrent detected by the photocurrent detection circuit decreases.

Other and further objects, features and advantages of the invention will appear more fully from the following description.

## Brief Deseription of the Drawings

FIG.1 shows the configuration of an optical receiver according to a first embodiment of the present invention;
FIG.2 shows the photoelectric conversion circuit;
FIG.3 shows the circuit diagram of current sink circuit;
Fig.4 shows the circuit diagram of the high voltage generating circuit;
FIG.5 shows the current/voltage waveforms at selected points in the circuit of Fig. 4;
FIG. 6 shows the current/voltage waveforms of the optical receiver;
FIG. 7 shows the slope of the optical input power vs. sink current (ISINK) curve;
FIG. 8 is a diagram showing the configuration of an optical receiver according to a second embodiment of the present invention;
FIG.9 is a circuit diagram showing the current sink circuit;
FIG.10 shows the relationships between the optical input power and the current ISINK drawn into the current sink circuit from the output of the high voltage generating circuit and between the optical input power and the current Iapd generated by the photoelectric conversion circuit from the optical input signal;
FIG. 11 is a diagram showing the configuration of an optical receiver according to a third embodiment of the present invention;
FIG.12 is a circuit diagram showing the photocurrent detection circuit;
FIG.13 shows that the current ISINK drawn into the current sink circuit can be adjusted to compensate for variations in the APD current Iapd;
FIG.14 is illustrates the configuration of a typical optical receiver;
FIG.15 is a schematic block diagram showing the configuration of the a typical optical receiver; and
FIG.16 shows the current and voltage waveforms of the typical optical receiver.

**Detailed description of the Preferred Embodiments**

**First Embodiment**

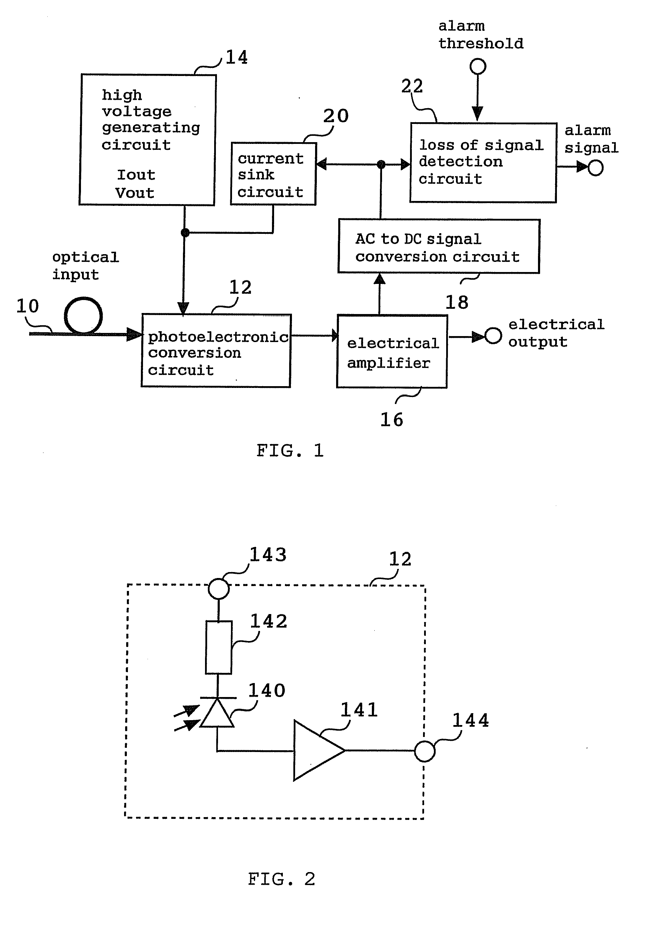

Fig. 1 shows the configuration of an optical receiver according to a first embodiment of the present invention. This optical receiver will be described below with reference to Fig. 1. The optical receiver includes a photoelectric conversion circuit 12 for converting the optical input signal received from an optical fiber 10 into an electrical signal. According to the present embodiment, the photoelectric conversion circuit 12 employs an APD.

The optical receiver also includes a high voltage generating circuit 14 for supplying a drive voltage to the APD of the photoelectric conversion circuit 12. The high voltage generating circuit 14 incorporates a booster circuit for producing the APD drive voltage. (The output current and the output voltage of the high voltage generating circuit 14 are hereinafter indicated by Iout and Vout, respectively.)

Thus, the photoelectric conversion circuit 12 is supplied with a voltage from the high voltage generating circuit 14 and converts the optical input signal into an electrical signal which is output to an electrical amplifier 16. The electrical amplifier 16 amplifies this electrical signal to an amplitude appropriate for the subsequent stage of the optical receiver. The amplified electrical signal is input to an AC to DC signal conversion circuit 18 which converts the AC voltage signal component of the signal to a DC voltage signal. That is, the AC to DC signal conversion circuit 18 outputs a DC voltage signal corresponding to the level of the optical input signal, thereby allowing detection of the presence or absence of the optical input signal.

The optical receiver of the present embodiment also includes a loss of signal detection circuit 22 for comparing the DC voltage signal with a predetermined threshold voltage (or alarm threshold) to detect interruption of the optical input signal. That is, the loss of signal detection circuit 22 receives the DC signal and outputs a digital alarm signal which is set to 1 when the voltage level of the received DC signal is below the threshold voltage (that is, when the optical input signal is interrupted), and set to 0 when the voltage level of the DC signal exceeds the threshold voltage (that is, when the optical input signal is not interrupted). It should be noted that the loss of signal detection circuit 22 may be external to the substrate on which the high voltage generating circuit 14, etc. are mounted.

The optical receiver of the present embodiment also includes a current sink circuit 20 for drawing a current from the output of the high voltage generating circuit 14 (or acting as an additional current load on the high voltage generating circuit 14) in response to the signal output from the AC to DC signal conversion circuit 18 (the output signal corresponding to the amplitude of the optical input signal). That is, when the optical input signal to the optical receiver is reduced in intensity or interrupted, the current sink circuit 20 draws a current from the output of the high voltage generating circuit 14 such that the output current of the high voltage generating circuit 14 is maintained constant.

Thus, this current sink circuit 20, which is a feature of the present embodiment, adjusts its output current in accordance with the level of the output signal of the AC to DC signal conversion circuit 18 in such a way that the output current (Iout) of the high voltage generating circuit 14 is maintained constant (the output signal level corresponding to the level of the optical input signal). The circuit configuration of the current sink circuit 20 will be described in detail later.

This completes the outline of the configuration of the optical receiver of the present embodiment. The photoelectric conversion circuit 12, the current sink circuit 20, and the high voltage generating circuit 14 of the present embodiment will now be described in detail with reference to circuit diagrams thereof.

The photoelectric conversion circuit 12 will be first described with reference to Fig. 2. The photoelectric conversion circuit 12 includes a photodetector 140, a current-to-voltage conversion amplifier (or transimpedance amplifier (TIA)) 141, and a resistance 142. The photoelectric conversion circuit 12 includes terminals 143 and 144 which are connected to the high voltage generating circuit 14 and the electrical amplifier 16, respectively.

More specifically, the resistance 142 is connected in series between the high voltage generating circuit 14 and the photodetector 140 and serves to passively control (or limit) the voltage applied to the photodetector 140 and its multiplication factor M in response to variations in the photocurrent. That is, the resistance 142 serves to reduce the voltage applied to the photodetector 140 and thereby reduce its multiplication factor M when the photocurrent is increased, and serves to increase the voltage applied to the photodetector 140 and thereby increase its multiplication factor M when the photocurrent is decreased. Therefore, the resistance 142 does not function to reduce the voltage applied to the photodetector 140 when the optical input signal to the optical receiver is interrupted (which results in a decrease in the photocurrent). It should be noted that the resistance 14 is not necessarily required; the high voltage generating circuit 14 may be directly connected to the photodetector 140.

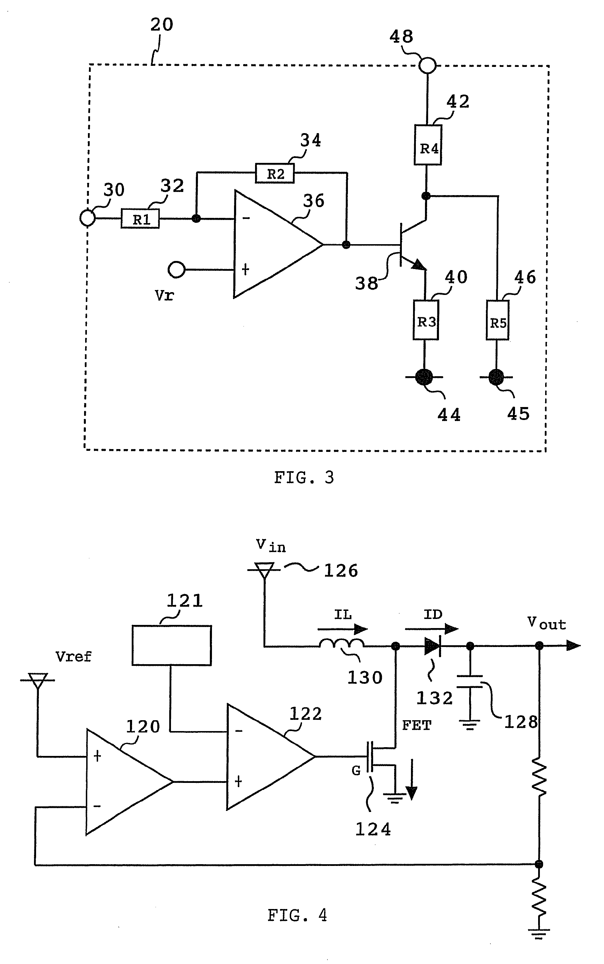

The current sink circuit 20 will now be described with reference to the circuit diagram of Fig. 3. The current sink circuit 20 includes an inverting amplifier, or operational amplifier, 36. The output of the AC to DC signal conversion circuit 18 is input to the inverting input of the inverting amplifier 36 through an input terminal 30 and a resistance 32. The resistance 32 is used to control the gain of the inverting amplifier 36. On the other hand, a reference potential Vr is applied to the noninverting input of the inverting amplifier 36. Further, a resistance 34 is connected between the inverting input and the output of the inverting amplifier 36. The values of the resistances 32 and 34 are denoted by R1 andR2, respectively.

The output of the inverting amplifier 36 is input to the base of a transistor 38. The emitter of the transistor 38 is connected to a low potential 44 through a resistance 40. The value of the resistance 40 is denoted by R3. On the other hand, the output, 48, of the current sink circuit 20 is connected to the collector of the transistor 38 through a resistance 42. The value of the resistance 42 is denoted by R4. Further, the junction 47 between the collector of the transistor 38 and the resistance 42 is connected to a low potential 45 through a resistance 46. The value of the resistance 46 is denoted by R5. The low potentials 44 and 45 are lower than the output voltage Vout of the high voltage generating circuit 14. It should be noted that these potentials 44 and 45 may be ground potential.

The output 48 of the current sink circuit 20 is connected to the junction between the high voltage generating circuit 14 and the photoelectric conversion circuit 12 (see also Fig. 1). Therefore, when the transistor 38 of the current sink circuit 20 is turned on, a current flows from the high voltage generating circuit 14 to the current sink circuit 20.

The high voltage generating circuit 14 of the present embodiment will now be described with reference to the circuit diagram of Fig. 4.

The high voltage generating circuit 14 includes an FET (field effect transistor) 124. When the FET 124 is turned off, an input voltage Vin (also denoted by numeral 126 in Fig. 4) is applied to a capacitor 128 through a coil 130 and a diode 132, thereby charging the capacitor 128. Then when the FET 124 is turned on (i.e., transitioned from its OFF to ON state), a current i flows from the input potential Vin to ground potential through the coil 130. The time rate of change of the this current (di/dt) is proportional to the ratio of the input potential Vin to the inductance L of the coil 130, as expressed by Equation 3 below.

$$\frac{di}{dt} = \frac{V_L}{L} \qquad \cdot \cdot \cdot \; equation \; 3 \; .$$

It will be noted that when the FET 124 is turned on, the diode 132 connected to the capacitor 128 prevents the charge on the capacitor 128 from being discharged to the FET 124 side.

Then when the FET 124 is turned off (i.e., transitioned from its ON to OFF state), a current i flows through the coil 130 and the diode 132 in its forward direction, thereby charging the capacitor 128. As a result, the output voltage Vout of the high voltage generating circuit 14 increases, as expressed by Equation 4 below.

$$Vout = Vin + L\frac{di}{dt} \qquad \cdot \cdot \cdot \; equation4 \; .$$

When the output voltage Vout has exceeded a certain level, a reverse current flows from the anode of the diode 132 to the input potential 126 through the coil 130.

Since the current flowing through the coil 130 averaged over each switching cycle of the FET 124 is zero, the output voltage Vout of the high voltage generating circuit 14 is represented by Equation 5 below.

$$Vout = Vin + V_L = Vin + \frac{ton}{toff}Vin = (\frac{ton + toff}{toff})Vin = \frac{Vin}{1-D}$$

$$\cdot \cdot \cdot \; equation5$$

where D is the duty ratio, ton is the on-time of the FET 124, and toff is the off-time of the FET 124. The duty ratio D is defined by Equation 6 below.

$$D = \frac{ton}{ton + toff} \qquad \cdots \quad equation\ 6$$

The high voltage generating circuit 14 of the present embodiment maintains its output voltage Vout constant by adjusting the duty ratio D of the FET 124. This control is achieved by varying the pulse width of the digital signal applied to the gate of the FET 124. This digital signal is generated as follows. Referring to Fig. 4, a reference voltage Vref and a sample voltage obtained by division of the output voltage Vout using resistances are input to an operational amplifier 120 which outputs a differential signal. This differential signal and the output of an oscillator 121 are input to an operational amplifier 122 which outputs a digital signal with an appropriate pulse width which is then applied to the gate of the FET 124.

Such a control method is referred to as PWM (pulse width modulation) control. The PWM control loop is usually designed to have a relatively long convergence time in order to provide a stable output voltage regardless of the disturbing noise level. It should be noted that the PWM control loop of the present embodiment has a convergence time of approximately 10 msec.

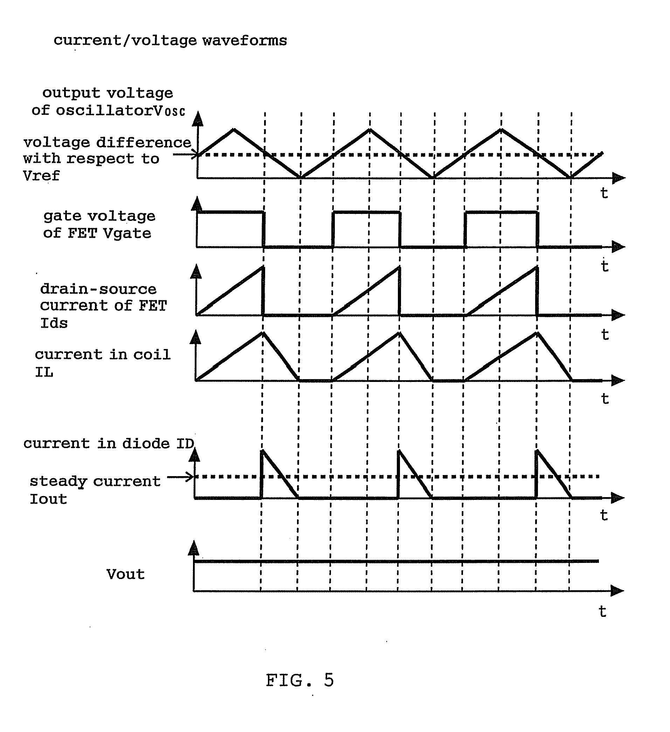

This completes the description of the configuration of the high voltage generating circuit 14 of the present embodiment. Fig. 5 shows the current/voltage waveforms at selected points in the circuit of Fig. 4.

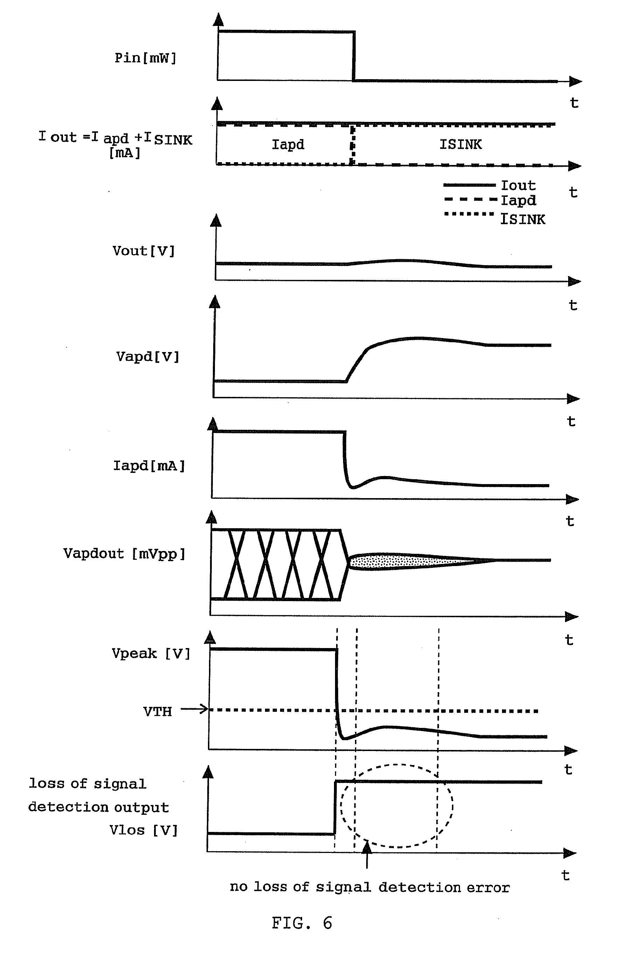

With reference to the current/voltage waveforms shown in Fig. 6, there will now be described the operation and features of the optical receiver of the present embodiment configured as described above. Referring to Fig. 6, when the optical input signal Pin is interrupted, the APD current Iapd and the electrical signal output Vapdout of the photoelectric conversion circuit 12 decrease. The decrease in the electrical signal output Vapdout of the photoelectric conversion circuit 12 is such that the signal level output Vpeak of the AC to DC signal conversion circuit 18 is below the threshold voltage VTH.

The current sink circuit 20 receives the signal level output Vpeak. Referring also to Fig. 3, in the current sink circuit 20, the received signal level output Vpeak is reversed in polarity by the inverting amplifier 36 and input to the base of the transistor 38. The emitter voltage of the transistor 38 varies with its base voltage. A current $I_{SINK}$ flows from the output 48 to the low potential 44 side. This current $I_{SINK}$ is (substantially) determined by the resistance R3 and the potential difference between the emitter voltage of the transistor 38 and the low potential 44, as expressed by Equation 7 below.

$$I_{SINK} = \frac{V_E}{R_3} = \frac{V_B - V_{BE}}{R_3} = \frac{1}{R_3}\left\{Vr - \frac{R_2}{R_1}(Vin - Vr) - V_{BE}\right\}$$

$$= \frac{1}{R_3}\left\{(1 + \frac{R_2}{R_1})Vr - \frac{R_2}{R_1}Vin - V_{BE}\right\} \qquad \cdots \quad equation7$$

where Vr is the reference potential of the inverting amplifier 36, Vin is the signal level output (Vpeak) of the AC to DC signal conversion circuit 18, $V_E$ is the emitter voltage of the transistor 38, $V_B$ is the base voltage, and $V_{BE}$ is the base-emitter voltage. As Equation 7 indicates, the current $I_{SINK}$ increases as the signal level output Vin decreases. That is, when the optical input signal is reduced in intensity or interrupted, the current $I_{SINK}$ increases to compensate for the decrease in the APD current Iapd. The resulting output current Iout of the high voltage generating circuit 14 is as shown in Fig. 6. As shown, when the optical input signal to the optical receiver is not interrupted, the output current Iout consists primarily of the APD current Iapd; when the optical input signal is interrupted, the output current Iout consists primarily of the current $I_{SINK}$ drawn into the current sink circuit 20. In this way, the output current Iout is maintained constant regardless of whether or not the optical input signal is interrupted. Thus, the output current Iout of the high voltage generating circuit 14 is the sum of the APD current Iapd and the current $I_{SINK}$, as indicated by Equation 8 below.

$$Iout = Iapd + I_{SINK} \qquad \cdots \quad equation8$$

where Iapd is indicated by equation9 as shown below.

$$Iapd = Pin \times Re \times M \qquad \cdot \cdot \cdot equation 9$$

where Pin is the average optical power (mW) input to the optical receiver, Re is the photoelectric conversion efficiency (A/W), and M is the multiplication factor as expressed by Equation 2. Assuming that the value of M (hereinafter referred to as the "M value") is constant, the APD current Iapd is proportional to the average optical power Pin. Therefore, the output current Iout of the high voltage generating circuit 14 can be maintained substantially constant, regardless of whether or not the optical input signal is interrupted, by adjusting the current $I_{SINK}$ to compensate for changes in the APD current Iapd.

Thus, the present embodiment is **characterized in that** the output current Iout of the high voltage generating circuit 14 is maintained constant by means of the current sink circuit 20 connected to the output of the high voltage generating circuit 14. Specifically, the current sink circuit 20 functions to maintain the load conditions of the high voltage generating circuit 14 constant regardless of changes in the optical input signal level. Therefore even if the optical input signal is interrupted, there is no increase in the output voltage Vout of the high voltage generating circuit 14 and hence in the dark current of the APD, ensuring detection of the interruption.

It should be noted that the current sink circuit 20 has a sufficiently shorter response time than the high voltage generating circuit 14. According to the present embodiment, the feedback control loop of the current sink circuit 20, which includes the inverting amplifier 36 (a general operational amplifier) and the transistor 38, has a response time of a few hundreds of microseconds, whereas the high voltage generating circuit 14 has a response time of a few milliseconds. This ensures that the current sink circuit 20 draws a current ($I_{SINK}$) from the output of the high voltage generating circuit 14 (or, acts as an additional current load on the circuit 14) so that the output current Iout of the high voltage generating circuit 14 is maintained constant.

In this connection, some prior art high voltage generating circuits have a constant current load connected thereto to achieve stable output conditions. In such a case, however, the increased current consumption heats up the optical receiver, which may prevent its circuitry from operating properly. In the case of the optical receiver of the present embodiment, on the other hand, the current sink circuit 20 draws a current from the output of the high voltage generating circuit 14 (i.e., acts as an additional current load on the circuit 14) in response to the signal level output of the AC to DC signal conversion circuit 18 in such a way that the output current Iout of the high voltage generating circuit 14 is maintained substantially constant (the signal level output corresponding to the level of the optical input signal). This avoids an increase in the power consumption and the heat generated in the optical receiver.

Further, according to the present embodiment, the output current Iout of the high voltage generating circuit 14 is controlled independently of the photocurrent (or electrical signal) of the APD, since the current sink circuit 20 draws a current from the output of the high voltage generating circuit 14. Therefore, according to the present embodiment, the output voltage Vout of the high voltage generating circuit 14 can be maintained substantially constant without changing the reverse voltage applied to the APD and hence without a change in the M value of the APD thereby maintaining the sensitivity of the optical receiver. (It should be noted that direct control of the output voltage of the high voltage generating circuit results in a change in the M value and ultimately a change in the sensitivity of the optical receiver.)

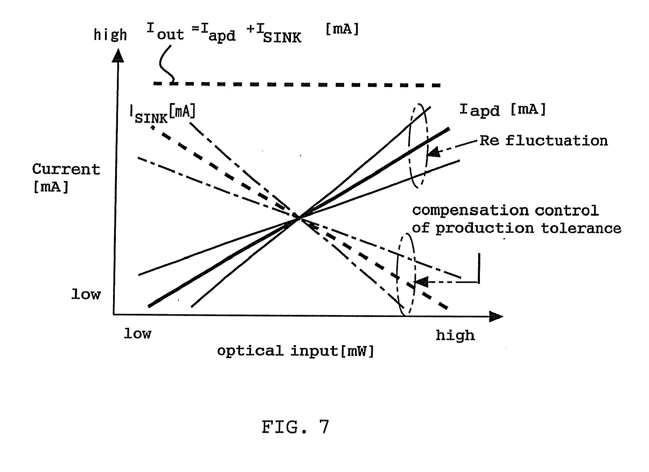

The photoelectric conversion efficiency Re and the M value of the APD may vary due to manufacturing variations of the APD, which may make it difficult to maintain the Iout of the high voltage generating circuit constant in the case of prior art optical receivers. In the case of the optical receiver of the present embodiment, however, the output current Iout of the high voltage generating circuit can be maintained substantially constant by adjusting the rate of change of the current $I_{SINK}$ (drawn into the current sink circuit) with respect to the rate of change of the optical input power, i.e., by adjusting the slope of the optical input power vs. sink current ($I_{SINK}$) curve as shown in Fig. 7, in response to variations in the photoelectric conversion efficiency Re. (This slope can be adjusted by varying the control gain of the operational amplifier circuit of the current sink circuit shown in Fig. 3, i.e. , by varying the ratio of R2 to R1.) Fig. 7 is a diagram showing the rate of change of the APD current Iapd and the rate of change of the current $I_{SINK}$ with respect to the rate of change of the optical input power. As shown, the current $I_{SINK}$ can be varied to compensate for variations in the photoelectric conversion efficiency Re and the M value of the APD due to manufacturing variations of the APD and thereby to maintain the output current Iout of the high voltage generating circuit substantially constant.

Referring now to Fig. 3, the resistances 42 and 46 are used to reduce the voltage applied between the collector and emitter of the transistor 38 to a value lower than the derated maximum collector-to-emitter voltage rating ($V_{CE}$) of the transistor 38. That is, when the transistor 38 is of small size due to space requirements, etc., its derated maximum collector-to-emitter voltage rating may be lower than the output voltage Vout of the high voltage generating circuit 14. (It should be noted that when the high voltage generating circuit 14 is connected to a photoelectric conversion circuit employing an APD, its output voltage Vout must be set relatively high.) The resistances 42 and 46 are used in such a case to divide the voltage Vout. Therefore, these resistances may be omitted when the derated maximum collector-to-emitter voltage rating of the transistor 38 is sufficiently greater than the drive voltage of the APD (i.e., greater than the output voltage Vout of the high voltage generating circuit 14).

Although in the present embodiment the current sink circuit 20 includes the bipolar transistor 38 to maintain the output current Iout of the high voltage generating circuit 14 constant, it is to be understood that in other embodiments the current sink circuit 20 may include a different current control device capable of such control.

Second Embodiment

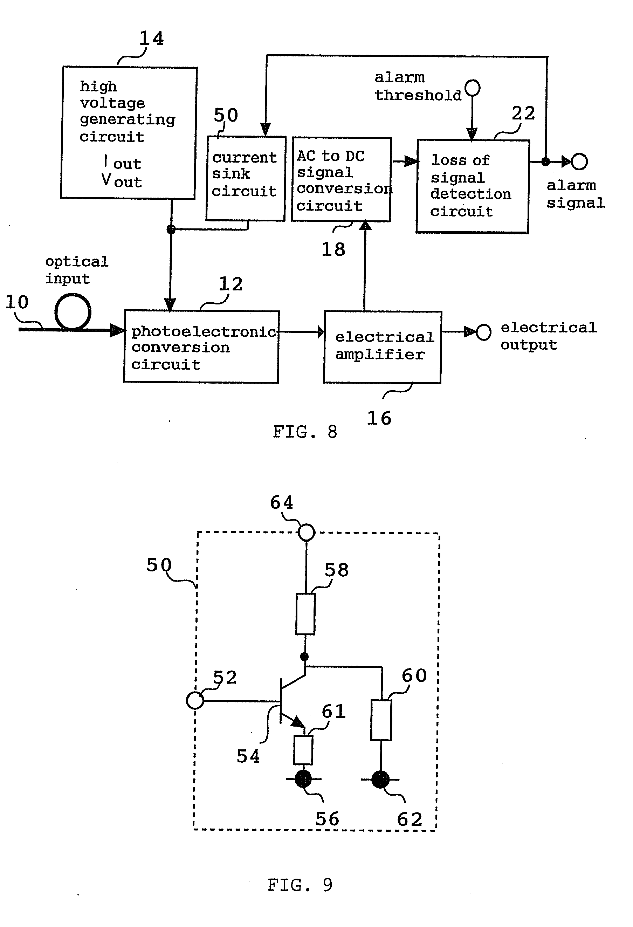

Fig. 8 is a diagram showing the configuration of an optical receiver according to a second embodiment of the present invention. It should be noted that those components common to Fig. 1 retain the same reference numerals and will not be further described. This optical receiver is characterized by including a current sink circuit 50 which receives the output of the loss of signal detection circuit 22. The output of the loss of signal detection circuit 22 is a digital signal which is set to 1 when the optical input signal to the optical receiver is interrupted, and otherwise set to 0, as described in connection with the first embodiment.

According to the present embodiment, the current sink circuit 50 draws from the output of the high voltage generating circuit 14 a current that varies in response to this digital signal in such a way as to reduce variations in the output current Iout of the high voltage generating circuit 14.

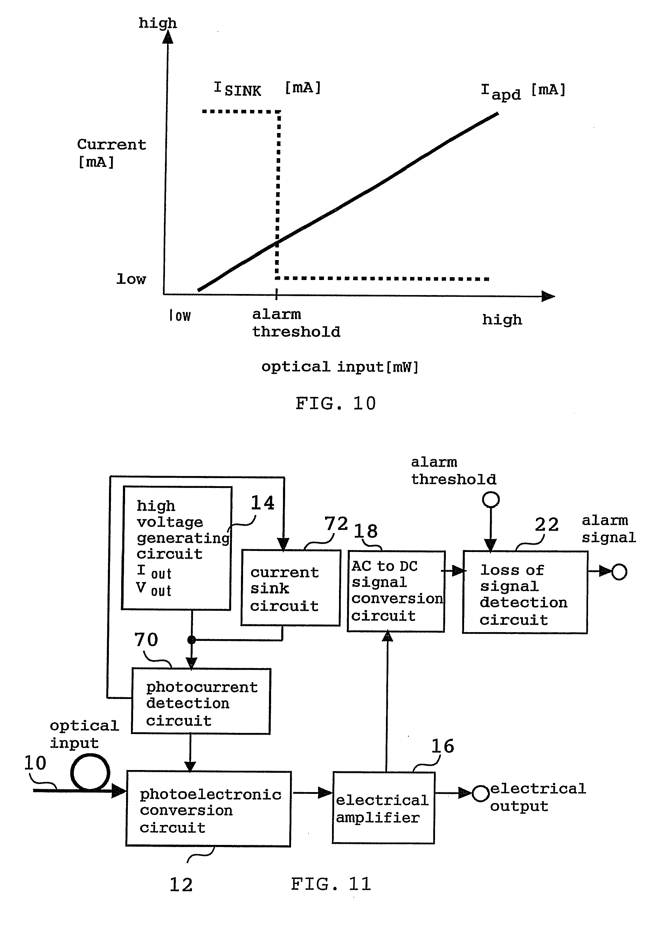

Fig. 10 shows the relationships between the optical input power and the current $I_{SINK}$ drawn into the current sink circuit 50 from the output of the high voltage generating circuit 14 and between the optical input power and the current Iapd generated by the photoelectric conversion circuit 12 from the optical input signal. The output current Iout of the high voltage generating circuit 14 is the sum of the current $I_{SINK}$ and the APD current Iapd, as in the first embodiment.

As shown in Fig. 10, when the APD current Iapd is sufficiently high, the output of the loss of signal detection circuit is set to 0, with the result that the current $I_{SINK}$ is low. In this state, the output current Iout of the high voltage generating circuit consists primarily of the APD current Iapd. On the other hand, when the APD current Iapd is low (as a result of the optical input signal being small), that is, when the signal level output Vpeak of the AC to DC signal conversion circuit 18 is lower than the alarm threshold voltage VTH, the output of the loss of signal detection circuit is set to 1, with the result that the current $I_{SINK}$ is increased. In this state, the output current Iout of the high voltage generating circuit consists primarily of the current $I_{SINK}$.

Since the current sink circuit 50 is controlled by the digital signal output from the loss of signal detection circuit 22, the control system has high noise immunity even if the photoelectric conversion circuit 12 converts the optical input signal into only a small electrical signal. Further, the current sink circuit 50 does not require adjustment, since it does not include an operational amplifier (see Fig. 9), as does the current sink circuit 20 of the first embodiment. (The current $I_{SINK}$ drawn into the current sink circuit 50 does not vary uniformly with the optical input power or the signal level output Vpeak of the AC to DC signal conversion circuit 18; it switches between two levels, as shown in Fig. 10.)

As described above, the output current (i.e., the current $I_{STNK}$) of the current sink circuit 50 does not vary continuously with the signal level output (Vpeak) of the AC to DC signal conversion circuit 18 as in the first embodiment. However, the current sink circuit 50 can still operate to minimize the variation in the output current Iout of the high voltage generating circuit 14 due to the interruption of the optical input signal to the optical receiver. This prevents an increase in the output voltage Vout of the high voltage generating circuit 14 when the optical input signal is interrupted, thus preventing the loss of signal from being undetected. Specifically, when the optical input signal is interrupted, the current sink circuit 50 draws a current from the output of the high voltage generating circuit 14 (or acts as an additional current load on the high voltage generating circuit 14) so as to minimize the variation in the output current Iout of the high voltage generating circuit 14 due to this interruption. This is done before the high voltage generating circuit 14 responds to the interruption, since the current sink circuit 50 has a sufficiently shorter response time than the high voltage generating circuit 14, as in the first embodiment. This prevents a high voltage from being applied to the APD, thereby preventing the loss of signal from being undetected. Further, since the current sink circuit 50 draws a current ($I_{SINK}$) from the output of the high voltage generating circuit 14 (or acts as a current load) only when the optical input signal to the optical receiver is interrupted, the heat generation in the optical receiver is reduced as compared to conventional arrangements. Further, this arrangement does not affect the sensitivity of the optical receiver, since the M value of the APD is not changed.

Fig. 9 is a circuit diagram showing the current sink circuit 50. The current sink circuit 50 has an input 52 for receiving the output of the loss of signal detection circuit 22. In the current sink circuit 50, the input 52 is connected to the base of a transistor 54, and the emitter of the transistor 54 is connected to a low potential 56 through a resistance 61. The collector of the transistor 54, on the other hand, is connected to an output 64 through a resistance 58. Further, the junction between the collector of the transistor 54 and the resistance 58 is connected to a low potential 62 through a resistance 60. It should be noted that the resistance 61 may be omitted; the emitter of the transistor 54 may be directly connected to the low potential 56.

There will now be described the operation of the current sink circuit 50 configured as described above. When the loss of signal detection circuit 22 detects a loss of signal, it sets its output to 1. This output signal is applied to the input 52 of the transistor 54 of the current sink circuit 50. This turns on the transistor 54, resulting in an increase in the current drawn into the current sink circuit 50 from the output of the high voltage generating circuit 14. When the loss of signal detection circuit 22 does not detect a loss of signal, on the other hand, it sets its output to 0 . This output signal is applied to the input 52 of the transistor 54 of the current sink circuit 50, with the result that the transistor 54 is turned off resulting in a decrease in the current drawn into the current sink circuit 50 from the output of the high voltage generating circuit 14. Thus, this current sink circuit 50 has a simpler configuration and hence a lower parts count than the current sink circuit of the first embodiment.

In an alternative arrangement of the present embodiment, the output of the loss of signal detection circuit 22 may be set to 0 when the optical input signal to the optical receiver is interrupted (i.e., when an alarm is to be annunciated), and otherwise set to 1. In this case, the current sink circuit must be constructed such that the current $I_{SINK}$ drawn into the current sink circuit is decreased when the output of the loss of signal detection circuit is set to 1, and increased when the output is set to 0. This may be accomplished by replacing the transistor 54 of the current sink circuit with a transistor of the opposite conductivity type, etc. This arrangement also achieves the advantages described in connection with the present embodiment. Further, although in the present embodiment the current sink circuit 50 includes the bipolar transistor 54 to reduce changes in the output current Iout of the high voltage generating circuit 14, it is to be understood that in other embodiments the current sink circuit 50 may include a different current control device capable of such control.

Third Embodiment

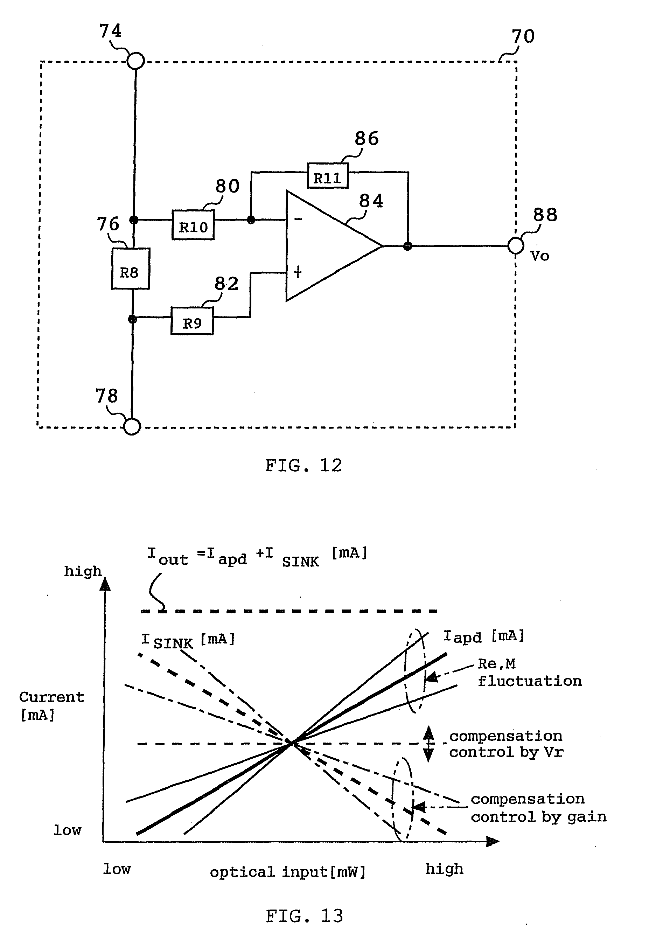

Fig. 11 is a diagram showing the configuration of an optical receiver according to a third embodiment of the present invention. It should be noted that those components common to Fig. 1 retain the same reference numerals and will not be further described. This optical receiver is characterized by including a photocurrent detection circuit 70, which will be described in detail with reference to Fig. 12.

The photocurrent detection circuit 70 has a high voltage generating circuit-connecting point 74 connected to the high voltage generating circuit 14, and a photoelectric conversion circuit-connecting point 78 connected to the photoelectric conversion circuit 12. The connecting point 74 is connected to the connecting point 78 through a resistance 76. The value of the resistance 76 is denoted by R8.

The photocurrent detection circuit 70 also includes an inverting amplifier 84 (an operational amplifier) whose inputs are connected to the respective ends of the resistance 76. More specifically, the inverting input of the inverting amplifier 84 is connected through a resistance 80 to the junction between the resistance 76 and the high voltage generating circuit-connecting point 74, and the noninverting input of the inverting amplifier 84 is connected through a resistance 82 to the junction between the resistance 76 and the photoelectric conversion circuit-connecting point 78.

The values of the resistances 80 and 82 are denoted by R10 and R9, respectively. A resistance 86 is connected between the inverting input and the output of the inverting amplifier 84. The value of the resistance 86 is denoted by R11. The output of the inverting amplifier 84 becomes the output, 88, of the photocurrent detection circuit 70. The output 88 of the photocurrent detection circuit 70 is also denoted by Vo and expressed by Equation 10 below.

$$Vo = (Vout - R_8 Iapd) - \frac{\{Vout - (Vout - R_8 Iapd)\}}{R_{10}} \times R_{11} = (Vout - R_8 Iapd) - \frac{R_8 Iapd}{R_{10}} \times R_{11}$$

$$= Vout - R_8 Iapd \times (\frac{R_{10} + R_{11}}{R_{10}}) \qquad \cdot \cdot \cdot \ equation \ 10$$

where Vout is the output voltage of the high voltage generating circuit 14 and Iapd is the current of the APD of the photoelectric conversion circuit 12. As Equation 10 indicates, the output Vo decreases as the APD current Iapd increases. The current sink circuit, 72, of the optical receiver of the present embodiment receives the output Vo of the photocurrent detection circuit 70 and is designed to draw from the output of the high voltage generating circuit 14 a current ($I_{SINK}$) that decreases as the output Vo decreases. For example, the current sink circuit 72 may have the configuration as shown in Fig. 9, and the output Vo of the photocurrent detection circuit 70 may be input to the input 52 shown in Fig. 9.

In the optical receiver of the present embodiment, as the APD current Iapd increases, the output Vo of the photocurrent detection circuit 70 decreases and hence the output current $I_{SINK}$ of the current sink circuit 72 (i.e., the current drawn into the current sink circuit 70) decreases. Therefore, when the optical input signal to the optical receiver is interrupted resulting in a decrease in the APD current Iapd, the output Vo of the photocurrent detection circuit 70 and the output current $I_{SINK}$ of the current sink circuit 72 increase. This means that the output current Iout of the high voltage generating circuit 14, which is the sum of the sink circuit output current $I_{SINK}$ and the APD current Iapd, is maintained substantially constant regardless of whether or not the optical input signal to the optical receiver is interrupted, thereby preventing a loss of signal from being undetected. This embodiment also achieves other advantages described in connection with the first embodiment. Further, according to the present embodiment, the level of the APD current Iapd is directly detected by the photocurrent detection circuit 70, not indirectly through the AC to DC signal conversion circuit 18 or the loss of signal detection circuit 22. Therefore, the current sink circuit 72 responds more quickly to an optical signal interruption than the current sink circuits of the first and second embodiments, resulting in more accurate detection of the loss of signal.

The slope of the optical input power vs. sink current ($I_{SINK}$) curve can be adjusted by varying the control gain of the operational amplifier circuit of the photocurrent detection circuit 70, i.e., by varying the ratio of the resistance 86 to the resistance 80, or R11 to R10 (see Figs. 12 and 13). Further, the offset of the optical input power vs. sink current ($I_{SINK}$) curve can also be adjusted by varying the resistance 76 (or R8). Thus, the current $I_{SINK}$ drawn into the current sink circuit 72 can be adjusted to compensate for variations in the APD current Iapd (or, variations in the photoelectric conversion efficiency Re and the M value of the APD) due to manufacturing variations of the APD, as shown in Fig. 13.

The optical receiver of the present embodiment is **characterized in that** the current sink circuit 72 draws a current from the output of the high voltage generating circuit 14, or acts as an additional current load on the high voltage generating circuit, in response to the optical input signal level output 88 of the photocurrent detection circuit 70 in such a way that the output current Iout of the high voltage generating circuit 14 is maintained substantially constant. Therefore, the current sink circuit 72 may have, but is not limited to, the configuration as shown in Fig. 9. Referring to Fig. 9, the resistance 61 may be omitted; the emitter of the transistor 54 may be directly connected to the low potential 56. It will be noted that the optical receivers of the first to third embodiments are **characterized in that** the output current of the high voltage generating circuit 14 is maintained substantially constant by a current sink circuit in order to prevent a loss of signal from being undetected. Although the present invention has been described with reference to these specific embodiments, it is to be understood that the invention is not limited thereto, and various alterations may be made thereto without departing from the scope of the invention.

Thus the present invention allows reliable detection of an interruption of the optical input signal.

Obviouslymanymodifications and variations of the present invention are possible in the light of the above teachings. It is therefore to be understood that within the scope of the appended claims the invention may be practiced otherwise than as specifically described.

## Claims

1. An optical receiver comprising:

   a photoelectric conversion circuit(12) for converting an optical input signal into an electrical signal;
   an AC to DC signal conversion circuit(18) for converting said electrical signal to a DC signal;
   a high voltage generating circuit(14) for supplying a voltage to said photoelectric conversion circuit(12); and
   a current sink circuit(20) for drawing a current from an output of said high voltage generating circuit(14);
   wherein said current drawn into said current sink circuit(20) from said output of said high voltage generating circuit(14) is increased as an output signal of said AC to DC signal conversion circuit(18) decreases.

2. The optical receiver as claimed in claim 1, wherein said current sink circuit(20) includes:

   an inverting amplifier(36) for inverting and amplifying a voltage value of said output signal of said AC to DC signal conversion circuit(18);
   a transistor(38) receiving on its base an output of said inverting amplifier; and
   a resistance(40,42) connected in series between said high voltage generating circuit(14) and a low potential (44) in such a manner that said resistance(40,42) is connected in series with the main current path of said transistor; and
   wherein said transistor(38) is connected to said output of said high voltage generating circuit(14) such that the main current of said transistor(38) constitutes said current drawn into said current sink circuit(20) from said output of said high voltage generating circuit(14).

3. An optical receiver comprising:

   a photoelectric conversion circuit(12) for converting an optical input signal into an electrical signal;
   an AC to DC signal conversion circuit(18) for converting said electrical signal to a DC signal;
   a high voltage generating circuit(14) for supplying a voltage to said photoelectric conversion circuit(12);
   a loss of signal detection circuit(22) for comparing a voltage value of an output signal of said AC to DC signal conversion circuit(18) with a threshold voltage to determine whether or not said optical input signal has been interrupted; and

a current sink circuit(50) for drawing a current from an output of said high voltage generating circuit(14) upon receiving a loss of signal output that is output from said loss of signal detection circuit(22) when said optical input signal is interrupted.

4.  The optical receiver as claimed in claim 3, wherein said current sink circuit(50) includes:

a resistance(58,61) connected in series between said high voltage generating circuit(14) and a low potential (56); and

a current control device connected in series with said resistance and turned on and off by an output of said loss of signal detection circuit(22).

5.  An optical receiver comprising:

a photoelectric conversion circuit(12) for converting an optical input signal into an electrical signal;
a high voltage generating circuit(14) for supplying a voltage to said photoelectric conversion circuit(12);
a photocurrent detection circuit(70) for detecting a photocurrent flowing from said high voltage generating circuit (14) to said photoelectric conversion circuit(12); and
a current sink circuit(72) for drawing a current from an output of said high voltage generating circuit(14);
wherein said current drawn into said current sink circuit(72) from said output of said high voltage generating circuit(14) is increased as said photocurrent detected by said photocurrent detection circuit(70) decreases.

6.  The optical receiver as claimed in claim 5, wherein said photocurrent detection circuit(70) includes:

a photocurrent detection resistance(76) connected in series between said high voltage generating circuit(14) and said photoelectric conversion circuit(12); and

an inverting amplifier(84) for outputting a voltage corresponding to the current flowing through said photocurrent detection resistance(76).

7.  The optical receiver as claimed in claim 5 or 6, wherein said current sink circuit(72) includes:

a transistor receiving on its base said output voltage of said photocurrent detection circuit(70);
a resistance connected in series between said high voltage generating circuit(14) and a low potential in such a manner that said resistance is connected in series with the main current path of said transistor; and
wherein said transistor is connected such that the main current of said transistor constitutes said current drawn into said current sink circuit(72) from said output of said high voltage generating circuit(14).

8.  The optical receiver as claimed in any one of claims 1 to 7, wherein said photoelectric conversion circuit(12) is an avalanche photodiode.

high voltage
generating
circuit

Iout
Vout

_14_

current
sink
circuit

_20_

alarm
threshold

loss of signal
detection
circuit

_22_

alarm
signal

optical
input

_10_

photoelectronic
conversion
circuit

_12_

AC to DC signal
conversion circuit

_18_

electrical
amplifier

_16_

electrical
output

FIG. 1

_143_

_142_

_140_

_141_

_12_

_144_

FIG. 2

FIG. 3

FIG. 4

current/voltage waveforms

output voltage
of oscillatorVosc

voltage difference
with respect to
Vref

gate voltage
of FET Vgate

drain-source
current of FET
Ids

current in coil
IL

current in diode ID

steady current
Iout

Vout

FIG. 5

Pin[mW]

$I_{out} = I_{apd} + I_{SINK}$ [mA]

Iapd ISINK

—— Iout
– – – Iapd
········ ISINK

Vout[V]

Vapd[V]

Iapd[mA]

Vapdout [mVpp]

Vpeak [V]

VTH →

loss of signal
detection output
Vlos [V]

no loss of signal detection error

FIG. 6

FIG. 7

14

```
high
voltage
generating
circuit

I out
V out
```

50

```
current
sink
circuit
```

```
AC to DC
signal
conversion
circuit
```

18

alarm
threshold

22

```
loss of
signal
detection
circuit
```

alarm
signal

optical
input

10

```
photoelectronic
conversion
circuit
```

12

```
electrical
amplifier
```

electrical
output

16

FIG. 8

64

50

58

52

60

61

54

56       62

FIG. 9

$I_{SINK}$ [mA]                    $I_{apd}$ [mA]

Current
[mA]

low

low        alarm                    high
           threshold

optical input[mW]

FIG. 10

alarm
threshold

| high voltage generating circuit $I_{out}$ $V_{out}$ | **14** | | **72** **18** | | **22** | alarm signal |

high voltage generating circuit $I_{out}$ $V_{out}$ **14**

**72** **18**

current sink circuit

AC to DC signal conversion circuit

loss of signal detection circuit **22**

**70**

photocurrent detection circuit

optical input

**10**

photoelectronic conversion circuit

electrical amplifier **16**

electrical output

**12**          FIG. 11

FIG. 12

FIG. 13

104

high
voltage
generating
circuit
$I_{out}$
$V_{out}$

optical
input

100

102

photoelectronic
conversion
circuit

108

AC to DC
signal
conversion
circuit

alarm
threshold

112

110

loss of
signal
detection
circuit

116

106

electrical
amplifier

114

electrical
output

FIG. 14
PRIOR ART

104

high
voltage
generating
circuit
$I_{out}$
$V_{out}$

optical
input

100

102

photoelectronic
conversion
circuit

108

AC to DC
signal
conversion
circuit

alarm
threshold

112

110

loss of
signal
detection
circuit

116

106

electrical
amplifier

114

FIG. 15
PRIOR ART

Pin[mW]

Iout[mA]

Vout[V]

Vapd[V]

Iapd[mA]

Vapdout [mVpp]

Vpeak [V]

VTH

loss of signal
detection
output
Vlos [V]

loss of signal detection error

FIG. 16
PRIOR ART

Europäisches
Patentamt

European
Patent Office

Office européen
des brevets

## EUROPEAN SEARCH REPORT

Application Number

EP 09 15 1433

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| D,X | JP 07 162369 A (NIPPON ELECTRIC CO) 23 June 1995 (1995-06-23) * abstract * * paragraphs [0008] - [0017] * * figure 1 * ----- | 1,2 | INV. H04B10/158 |
| D,X | JP 2005 354548 A (MITSUBISHI ELECTRIC CORP) 22 December 2005 (2005-12-22) * paragraphs [0029] - [0045] * * figures 8-13 * ----- | 5-8 | |
| D,A | JP 01 245725 A (HITACHI CABLE) 29 September 1989 (1989-09-29) * abstract * * figure 1 * ----- | 3,4 | |
| | | | TECHNICAL FIELDS SEARCHED (IPC) H04B |

| The present search report has been drawn up for all claims | | |
|---|---|---|
| Place of search | Date of completion of the search | Examiner |
| Munich | 26 March 2009 | Rolan Cisneros, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 146 446 A1**

## ANNEX TO THE EUROPEAN SEARCH REPORT
## ON EUROPEAN PATENT APPLICATION NO.

EP 09 15 1433

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2009

| Patent document cited in search report | | Publication date | Patent family member(s) | | Publication date |
|---|---|---|---|---|---|
| JP 7162369 | A | 23-06-1995 | JP | 2513435 B2 | 03-07-1996 |
| JP 2005354548 | A | 22-12-2005 | NONE | | |
| JP 1245725 | A | 29-09-1989 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1245725 A
- JP 58124339 A
- JP 2005354548 A
- JP 2005304022 A
- JP 7162369 A
- WO 2004010613 A